# EUROPEAN PATENT APPLICATION

(11) **EP 1 707 510 A2**
(43) Date of publication of application: **04.10.2006**
(21) Application number: 06075773.9
(22) Date of filing: 31.03.2006
(51) Int. Cl.: B65G 47/52, B65G 17/12, B65G 47/38

(54) **Sorting apparatus**

(30) Priority: 31.03.2005 EP 05075750
(71) Applicant: FPS Food Processing Systems B.V., 2631 RE Nootdorp (NL)
(72) Inventor: Ruigrok, Albertus Johannes, 2641 DP Pijnacker (NL)
(74) Representative: van Loon, C.J.J.

(57) **Abstract**

A sorting apparatus for sorting in particular delicate products such as fruit, the sorting apparatus comprising: at least one endless feed conveyor (10) and at least one endless sorting conveyor (20), the sorting conveyor being provided with carriers (21), for instance hand-shaped carriers and/or cups for each product separately, to carry the products, and the feed conveyor being configured to feed the products, and to transfer the products to the sorting conveyor, in particular such that the products can roll off the feed conveyor and can be received by the carriers, whereby the feed conveyor and sorting conveyor are configured such that the products upon transfer between the conveyors undergo only a substantially gradual change in velocity, and, preferably, makes a falling movement from the feed conveyor to a carrier of the sorting conveyor.

## Description

The present invention relates to an apparatus as described in the preamble of claim 1.

Such an apparatus is known from EP 982570. This publication describes different combinations for feeding and sorting products. For the sorting, that is, consecutive weighing and discharge by weight, a cup especially developed for that purpose is described. The endless conveyors mentioned each pass over two end wheels and extend over a certain length. In both exemplary embodiments, feeding proceeds along the top whereas the above-mentioned sorting is split over a line along the top/along the bottom.

Such apparatuses for sorting fruit are generally employed at large production companies, auctions, and packing stations. The products are processed there in many stages and in different ways. For instance, products are sorted which may be overripe and injured, or unripe, for instance coming directly from a production location such as an orchard. Further, the large quantities of fruit are mostly supplied in large crates from which the fruit is dumped into feed channels which are filled with water. Using the flow, the fruit is guided to the feed conveyor. In such situations, soiling of the apparatus will occur, in the case of overripe fruit as a result of fruit moisture, and furthermore, in the case of supply via channels, by entrained dirt such as soil particles. If processing proceeds in part along the top, as in the above-mentioned document, soiling from the upper part of the conveyor to the lower part passing under it can occur. This in turn can give rise to disturbances in the sorting process. Further, products may be seriously injured during the transfer.

To remedy this shortcoming, the apparatus according to the invention is characterized by the features of claim 1.

To be regarded as a major advantage of the features is that the products at transfer and transition from the feed conveyor to the sorting conveyor undergo only a gradual change in velocity. It has been found that with such a gradual transition, fewer products are injured and that the possible injuries are less serious.

In a particularly advantageous elaboration, the products, during transfer, at least during transfer from the feed conveyor to the sorting conveyor, can for instance possess velocity components in substantially the forward conveying direction and vertically downwards. Further, the feed conveyor and sorting conveyor can be configured such that the products during the transfer possess velocity components in substantially a forward conveying direction and vertically downwards.

The feed conveyor and the sorting conveyor can each be provided with substantially horizontal conveying paths to convey the products, for instance with substantially equally directed product conveying directions for conveying products along those conveying paths.

In a further elaboration, the feed conveyor and sorting conveyor are driven using substantially vertically upright end wheels, and the conveyors are synchronized.

In a further advantageous elaboration, the apparatus is configured such that a product during use makes a falling movement from the feed conveyor to a carrier of the sorting conveyor, preferably such that a maximum attained vertical fall velocity of the product is only just a bit greater than a vertical downwardly directed, at least instantaneous, velocity of the carrier of the sorting conveyor. The carriers of the sorting conveyor can for instance each make a substantially downward movement during reception of products coming from the feed conveyor and falling onto them. After reception of the products, the carriers can for instance be passed along a horizontal conveying path by the sorting conveyor.

In an advantageous elaboration, the feed conveyor comprises a roller conveyor, which in particular may be provided with rollers between which extend conveying positions on which the products can rest.

In a further elaboration, each carrier is provided with a tilting pin perpendicular to the conveying direction, such that the carriers, when they discharge the products, hinge about the respective tilting pins, each from a product conveying position to a discharge position.

Further, it is advantageous when the sorting conveyor is configured to pass the products along a detection path for detecting at least one characteristic of each product, and preferably along a discharge path to discharge the products in accordance with a detected at least one characteristic of each product, with the detection path and discharge path situated in particular along a bottom part of the sorting conveyor. The apparatus may be provided with a control, for instance computer, to classify the products in accordance with said characteristic, and to discharge the products in accordance with the classification.

During use, the products can be passed in particular along an upper part of the feed conveyor, and along a lower part of the sorting conveyor, in particular viewed from a product transfer area where the products during use are transferred from the feed conveyor to the sorting conveyor.

An embodiment of the invention provides a sorting apparatus for sorting products, in particular delicate products such as fruit, the sorting apparatus comprising:
- an endless feed conveyor for feeding the products in at least one single row in a conveying direction, and
- an endless sorting conveyor in line with and immediately following said feed conveyor, and with a corresponding at least one single row,
wherein the sorting conveyor passes the products, which at transfer roll off the downstream end of the feed conveyor and are received by the sorting conveyor, over a detection path past at least one single detection station for detecting and recording at least one single characteristic of each product, while further a computer is comprised for classifying the products in accordance with said characteristic, and
wherein the sorting conveyor then passes the products over a discharge path past discharge tracks onto which the products are delivered in accordance with said classification,
wherein said sorting conveyor conveys the products with hand-shaped carriers, such as, for instance, cups, for each product separately, one behind the other, mounted equidistantly, with for each carrier on the downstream side a tilting pin perpendicular to the conveying direction, whereby the carriers at discharge hinge about the tilting pin from a product conveying position to a discharge position,
wherein both conveyors are driven using substantially vertically upright end wheels and are synchronized,
wherein:
for the feed conveyor the conveying direction is followed along the top, and
for the sorting conveyor the conveying direction is followed along the bottom, with at least the detection path and the discharge path alongside it,
wherein during transfer the products possess velocity components in substantially the forward conveying direction and vertically downwards.

In contrast with the conveying apparatuses both conveying along the top, whereby during transfer and transition the initially downward movement is reversed, or actually involves bouncing, the products at transfer and transition in the apparatus according to the present invention continue to follow a largely downward movement. It has been found that with such a gradual transition fewer products are injured and that the possible injuries are less serious.

In a further exemplary embodiment according to the present invention, the apparatus has one or more of the following features:
- that the product position is taken up at least during the transfer of the products from the feed conveyor onto the sorting conveyor, while the tilting pin is kept in substantially the same position;
- that for taking up the product conveying position during the transfer, each carrier is provided with a follower which follows a guide;
- that the follower comprises a pin which is arranged on the opposite side of the tilting pin which projects from the row, the pin following a cam groove or cam slot whereby the carrier is kept in the product position.

According to another exemplary embodiment of the present invention, the apparatus has one or more of the following features:
- that the tilting pin is connected with a pin holder which during the transfer is kept in a substantially same pin holder position with a pin holder guide;
- that the pin holder guide comprises a guide wheel whose axle is freely rotatably connected with said sorting conveyor, and furthermore on one side is drivable, for instance with a pulley, for transmitting a circumferential velocity ratio during the transfer, and on the other side is connected with a guide system whereby along the detection path and the discharge path the carrier is guided in the product conveying position and in the discharge position, respectively;
- that the guide system comprises a wheel system which is arranged on the guide wheel and which is guided over a guide rail for causing the carrier to take up the product conveying position.

Further, the invention relates to an endless conveyor, for instance an above-mentioned sorting conveyor, provided with an upper part and a lower part and with carriers, for instance hand-shaped carriers and/or cups for each product separately, to carry the products, while each carrier is coupled to an endless conveyor portion so as to be tiltable by means of a tilting pin, the tilting pin being non-rotatably provided with a guide wheel, while the conveyor at an end part is provided with a first carrier positioner, in particular comprising a combination of pulleys and/or belt pulleys, to engage each guide wheel for the purpose of keeping the carriers in a product carrying position, when the carriers move from the upper conveyor part to the lower conveyor part. In a further elaboration, the conveyor can be provided with a second carrier positioner, in particular a guide rail, to engage a guide part of each product carrier when the product carrier moves along at least a part of the lower conveyor part, for keeping the carrier in the product carrying position, wherein in particular the guide wheel of the product carrier provides said guide part, and to that end more particularly is provided with a wheel system.

Further, the invention provides a method for conveying products, in particular delicate products such as fruit, comprising:
- feeding the products via an upper part of a first conveyor;
- transferring the products by an end part of the first conveyor to an opposite end part of a second conveyor; and
- passing the products on via a lower part of the second conveyor, while the products during the transfer between said end parts have at least a velocity component vertically downwards, and preferably undergo a substantially gradual change in velocity, and in particular make a falling movement.

Further advantageous elaborations of the invention are described in the claims.

Further details of the present invention will be described with reference to the drawing, wherein:
Figure 1 shows a schematic side view of a non-limiting first exemplary embodiment of an apparatus according to the invention;
Figure 2 schematically shows a velocity diagram of the velocity of a product during the transfer; and
Figure 3 shows a schematic side view of a second exemplary embodiment of an apparatus according to the invention.

In these figures, like or corresponding parts are designated by the same or corresponding reference numerals.

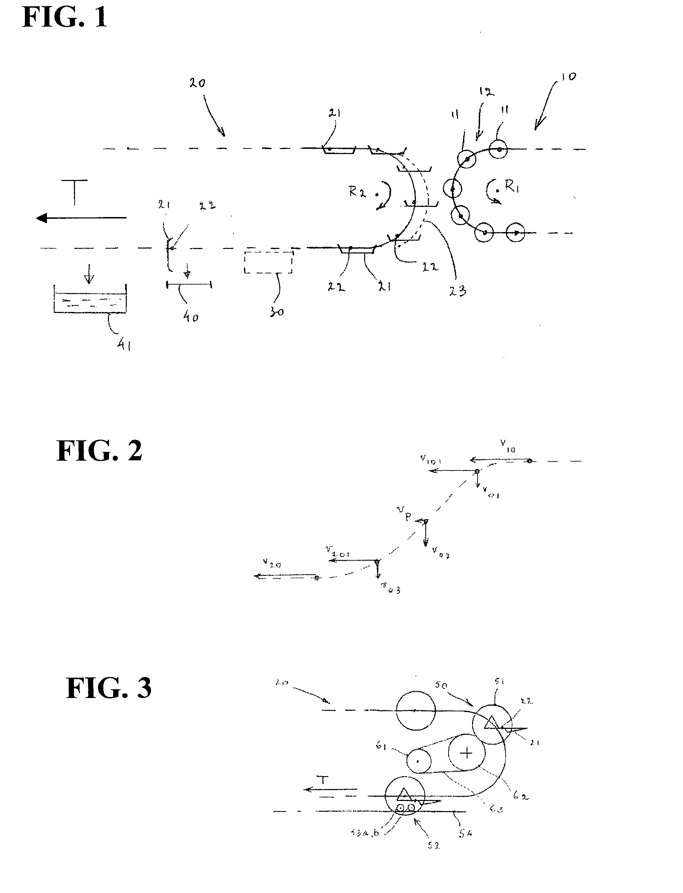

Fig. 1 schematically shows in side elevation how a first conveyor, in particular an endless feed conveyor 10, and a second conveyor, in particular an endless sorting conveyor 20, are placed in line with respective end parts (or bend parts) opposite each other. R1 and R2 indicate the rotational directions of these conveyors, at least at the end parts of the conveyors, which will be clear to those skilled in the art. Conveyor 10 is a so-called roller conveyor with rollers 11, generally diabolo-shaped rollers, defining between them conveying positions 12 where, resting between two of such successive rollers 11, products, for instance apples, can rest. Sorting conveyor 20 conveys these products, after transfer from feed conveyor 10, with cups 21. Successive conveyors 10, 20 form at least one single row. Mostly, there are several parallel rows. Drives, for instance electric motors, are not represented.

Discharge conveyor 20 conveys the products with cups 21 which, for instance, are each connected by way of a tilting pin 22 with an endless chain of the conveyor 20. To keep the cups 21 in the desired position at the transition from the feed conveyor 10 to the sorting conveyor 20, for instance in substantially horizontal position as represented in Fig. 1, a guide 23 is arranged. For instance, this guide 23 comprises a cam groove or cam slot in which a cam follows which is connected with a cup 21, so that when passing through the bend the cup is forced into and kept in the position drawn.

Furthermore, it is indicated for the sorting conveyor 20 how in the conveying direction T along the bottom the tilting pin 22 is positioned at the downstream side of the cup. After the cup 21 has passed a detection station 30, for instance for weighing, the products can be discharged as desired, for instance above a second discharge conveyor 40 or a water discharge 41. The tilting of such a cup is shown schematically. It will be clear to those skilled in the art how such constructions for locking and tilting can be realized.

Further, it will be clear that along the detection path several detection stations 30 can be passed and employed; that in a known manner the products can thereby be characterized, coded, and classified using computer programs, and that subsequently, in accordance with predetermined and priorly entered criteria, the discharge of the products can be carried out along a discharge path.

Fig. 2 schematically shows a velocity diagram for the velocities which a product has at the transition from the feed conveyor 10 to the sorting conveyor 20. A dotted line schematically represents the path or trajectory at transfer. For some five points along this path, the velocity components are schematically indicated. These components lie substantially in the horizontal forward and the vertical directions. Small oscillations in the horizontal transverse direction are disregarded for the application of an apparatus according to the present invention because the products will continue to follow the row they are in.

In Fig. 2, v10 indicates the velocity which the feed conveyor 10 has and hence imparts to a product in the horizontal feed path along the top during conveyance by a respective upper part of the feed conveyor 10. Drawn at the next point are v101 horizontally and v01 vertically. This situation concerns a position immediately after entering the bend, where the products are still situated between the rollers 11 but, with a slightly lesser straightforward velocity, already move down slightly. By vectorially combining these components v101, v01 the resultant velocity is obtained. Drawn approximately halfway the path of transfer are vp horizontally and v02 vertically. Vp reflects the relatively low velocity with which the product is propelled from between the rollers, and has just or is about to end up in a cup 21 of the sorting conveyor 20, while the product further traverses a fall movement with component v02. Represented at a next point are the components v201 and v03 which reflect the velocity of a cup 21 at the end of the return bend, just before the product proceeds to follow the horizontal detection path in the conveying direction T along the bottom, upon conveyance by a respective lower part of the sorting conveyor 20. Component v20 reflects the horizontal velocity of a cup 21, and hence of a product being carried along. It will be clear to those skilled in the art that the lengths of the velocity components shown schematically reflect the relative increase and decrease of the respective components.

Fig. 2 shows not only how the path proceeds, but also in particular how the velocity during a transfer behaves. It has been found that owing to the small relative velocities when a product comes down into a carrier, more particularly owing to the fall velocity of the product being only just a bit higher than the vertical velocity of the carrier, which is equal to that of the sorting conveyor, in combination with the elastic properties of the products and the carrier, a product is carried along by the carrier while being pressed on in a somewhat braking fashion. The above-mentioned possible bouncing in prior art systems is thus avoided entirely and injuries are prevented to a considerable extent. Especially for delicate products such as pears and peaches this has given a very clear improvement. Thus, as follows from the above, in the present embodiment, the feed conveyor and sorting conveyor are configured such that the products upon transfer between the conveyors undergo only a substantially gradual change in velocity, wherein particularly, the direction of the velocity of the products does not abruptly, but only substantially gradually, change during the transfer.

As a non-limiting example, a difference between the fall velocity of the product and an instantaneous vertical velocity of the carrier, when the product comes down into the carrier, can be in the range of about 0-20 cm/s, particularly 0-10 cm/s. Or, also, as an example, during use, the product can reach a carrier with a maximum vertically downward velocity with respect to the carrier of at most circa 20 cm/s and particularly at most circa 10 cm/s.

Fig. 3 schematically shows a further exemplary embodiment, now only for a part of the sorting conveyor 20, in side view. In particular, a pin holder 50 is shown, which is connected with the cup 21which, as described above, is capable of tilting about tilting pin 22. A lock for fixedly positioning the cup 21 on the pin holder 50 is not shown, for reasons of clarity, but is understood to be generally known.

More particularly, successive pin holders are connected with the sorting conveyor 20, for instance a chain conveyor, at mutual intervals matching the cups 21 used. In the exemplary embodiment shown, these pin holders 50 comprise a freely rotating pin holder guide or guide wheel 51. This freely rotating guide wheel is preferably in particular paths kept in the same position, viz. the substantially horizontal position or product conveying position, to receive the products and then to convey them to the proper discharge position. This may also be the case for further parts of the path. To be able to take up such a same position, the following provisions have been made.

Using a combination of for instance pulleys 61, 62 mutually connected by a belt or rope 63, a velocity ratio can be transmitted such that when a freely rotating pin holder butts against the pulley 62, the product conveying position is retained. Such butting action begins upon entry of the bend and ends at the end of the bend, with butting being achieved by, for instance, the friction between the circumferences of the rope and the pin holders. In order for the pin holders 50, after coming out of the bend, to be further kept in the product position, on each freely rotating guide wheel 51 a wheel system 52 is arranged, with two wheels 53 a,b (shown for one wheel only) which in well-defined parts of the path are guided like a carriage over a guide rail 54.

In this way, the invention can provide a combination of an endless feed conveyor, typically a roller conveyor, and a successive endless sorting conveyor, viz. a cup sorter. The conveying directions of the successive conveyors are preferably along the top and along the bottom, respectively. For the cup sorter, provisions may have been made for the cups that project when they pass through a bend in a transfer zone between the conveyors, to be kept in the proper product conveying position. Through this configuration, during conveyance and transfer, the products make a continuous flowing movement by which injuries to the products, for instance fruits, can be prevented to a considerable extent.

It will be clear to anyone skilled in the art that the conveyors 10 and 20 will be synchronized, for instance to retain the sequential order of the products being conveyed.

To those skilled in the art it will be clear that the invention is not limited to the exemplary embodiments described. Various modifications are possible within the framework of the invention as set forth in the following claims.

## Claims

1. A sorting apparatus for sorting products, in particular delicate products such as fruit, the sorting apparatus comprising: at least one endless feed conveyor and at least one endless sorting conveyor, the sorting conveyor being provided with carriers, for instance hand-shaped carriers and/or cups for each product separately, to carry the products, and the feed conveyor being configured to feed the products, and to transfer the products to the sorting conveyor, in particular such that the products can roll off the feed conveyor and can be received by the carriers, **characterized in that** the feed conveyor and sorting conveyor are configured such that the products upon transfer between the conveyors undergo only a substantially gradual change in velocity.

2. An apparatus according to claim 1, configured such that a product during use makes a falling movement from the feed conveyor to a carrier of the sorting conveyor, preferably such that a maximum attained vertical fall velocity of the product is only just a bit greater than a vertical downwardly directed velocity of the carrier of the sorting conveyor.

3. An apparatus according to any one of the preceding claims, wherein the feed conveyor and sorting conveyor are configured such that the products during the transfer possess velocity components in substantially a forward conveying direction and vertically downwards.

4. An apparatus according to any one of the preceding claims, wherein the sorting conveyor is configured to pass the products along a detection path for detecting at least one characteristic of each product, and preferably along a discharge path to discharge the products in accordance with a detected at least one characteristic of each product, with the detection path and discharge path situated in particular along a bottom part of the sorting conveyor.

5. An apparatus according to claim 4, provided with a control, for instance computer, to classify the products in accordance with said characteristic, and to discharge the products in accordance with the classification.

6. An apparatus according to any one of the preceding claims, wherein during use the products are passed in particular along an upper part of the feed conveyor, and along a lower part of the sorting conveyor, in particular viewed from a product transfer area where the products during use are transferred from the feed conveyor to the sorting conveyor.

7. An apparatus according to any one of the preceding claims, wherein the feed conveyor and the sorting conveyor are each provided with substantially horizontal conveying paths to convey the products.

8. An apparatus according to any one of the preceding claims, wherein each carrier is provided with a tilting pin perpendicular to the conveying direction, such that the carriers, when discharging the products, hinge about the respective tilting pins, each from a product conveying position to a discharge position.

9. An apparatus according to any one of the preceding claims, wherein the feed conveyor comprises a roller conveyor, which in particular is provided with rollers between which extend conveying positions on which the products can rest.

10. An apparatus according to any one of the preceding claims, the sorting apparatus comprising in succession:
- an endless feed conveyor for feeding the products in at least one single row in a conveying direction, and
- an endless sorting conveyor in line with and immediately following said feed conveyor, and with a corresponding at least one single row,
wherein the sorting conveyor passes the products, which at transfer roll off the downstream end of the feed conveyor and are received by the sorting conveyor, along a detection path past at least one single detection station for detecting and recording at least one single characteristic of each product, while further a computer is comprised for classifying the products in accordance with said characteristic, and
wherein the sorting conveyor then passes the products along a discharge path past discharge tracks onto which the products are discharged in accordance with said classification,
wherein said sorting conveyor conveys the products with hand-shaped carriers, such as for instance cups for each product separately, behind each other, mounted equidistantly, with for each carrier on the downstream side a tilting pin perpendicular to the conveying direction, whereby the carriers at discharge hinge about the tilting pin from a product conveying position to a discharge position,
wherein both conveyors are driven using vertically upright end wheels and are synchronized,
wherein:
for the feed conveyor the conveying direction is followed along the top, and
for the sorting conveyor the conveying direction is followed along the bottom, with at least the detection path and the discharge path alongside it,
wherein during transfer the products possess velocity components in substantially the forward conveying direction and vertically downwards.

11. An apparatus according to any one of the preceding claims, **characterized in that** the product position is taken up at least during the transfer of the products from the feed conveyor onto the sorting conveyor, while the tilting pin is kept in substantially the same position.

12. An apparatus according to any one of the preceding claims, **characterized in that** for taking up the product conveying position during the transfer, each carrier is provided with a follower which follows a guide.

13. An apparatus according to claim 12, **characterized in that** the follower comprises a pin which is arranged on the opposite side of the tilting pin which projects from the row, the pin following a cam groove or cam slot whereby the carrier is kept in the product position.

14. An apparatus according to any one of the preceding claims, **characterized in that** the tilting pin is connected with a pin holder which during the transfer is kept in a substantially same pin holder position with a pin holder guide.

15. An apparatus according to claim 14, **characterized in that** the pin holder guide comprises a guide wheel whose axle is freely rotatably connected with said sorting conveyor, and furthermore on one side is drivable, for instance with a pulley, for transmitting a circumferential velocity ratio during the transfer, and on the other side is connected with a guide system whereby during the detection path and the discharge path the carrier is guided in the product conveying position and in the discharge position, respectively.

16. An apparatus according to claim 15, **characterized in that** the guide system comprises a wheel system which is arranged on the guide wheel and which is guided over a guide rail for causing the carrier to take up the product conveying position.

17. An endless conveyor, for instance a sorting conveyor of an apparatus according to any one of the preceding claims, provided with an upper part and a lower part and with carriers, for instance hand-shaped carriers and/or cups for each product separately, to carry the products, each carrier being coupled to an endless conveyor portion so as to be tiltable by means of a tilting pin, the tilting pin being non-rotatably provided with a guide wheel, while the conveyor at an end part is provided with a first carrier positioner, in particular comprising a combination of pulleys, to engage each guide wheel for the purpose of keeping the carriers in a product carrying position, when the carriers move from the upper conveyor part to the lower conveyor part.

18. A conveyor according to claim 17, provided with a second carrier positioner, in particular a guide rail, to engage a guide part of each product carrier when the product carrier moves along at least a part of the lower conveyor part, for keeping the carrier in the product carrying position, while in particular the guide wheel of the product carrier provides said guide part, and to that end more particularly is provided with a wheel system.

19. A method for conveying products, in particular delicate products such as fruit, comprising:
- feeding the products via an upper part of a first conveyor;
- transferring the products by an end part of the first conveyor to an opposite end part of a second conveyor; and
- passing the products on via a lower part of the second conveyor, while the products during the transfer between said end parts have at least a velocity component vertically downwards, and preferably undergo a substantially gradual change in velocity, and in particular make a falling movement.
